# EUROPÄISCHE PATENTSCHRIFT

(11) **EP 2 513 495 B1**
(45) Veröffentlichungstag und Bekanntmachung des Hinweises auf die Patenterteilung: **14.05.2014**
(21) Anmeldenummer: 10790944.2
(22) Anmeldetag: 10.12.2010
(51) Int. Cl.: F16B 5/01, F16B 37/12, B64D 11/00

(54) **KRAFTEINLEITUNGSBESCHLAG FÜR LEICHTBAUKOMPONENTEN**
FORCE TRANSMISSION FITTING FOR LIGHTWEIGHT COMPONENTS
FERRURE D'APPLICATION DE FORCE POUR ÉLÉMENTS DE CONSTRUCTION LÉGÈRE

(30) Priorität: 15.12.2009 DE 102009058359; 15.12.2009 US 286482 P
(43) Veröffentlichungstag der Anmeldung: 24.10.2012
(73) Patentinhaber: Airbus Operations GmbH, 21129 Hamburg (DE)
(72) Erfinder: KLAUKIEN, Frank-Michael, 25474 Ellerbek (DE)
(74) Vertreter: Maiwald Patentanwalts GmbH
(86) Internationale Anmeldenummer: PCT/EP2010/069379
(87) Internationale Veröffentlichungsnummer: WO 2011/073099

(56) Entgegenhaltungen:
- EP-A1- 0 303 821
- EP-A1- 1 197 669
- US-B1- 6 708 637

## Beschreibung

Die vorliegende Anmeldung beansprucht die Priorität der US Provisional Patentanmeldung Nr. 61/286,482, eingereicht am 15. Dezember 2009 und der deutschen Patentanmeldung Nr. 10 2009 058 359.9, eingereicht am 15. Dezember 2009.

### TECHNISCHES GEBIET

Die Erfindung betrifft einen Krafteinleitungsbeschlag für Leichtbaukomponenten, eine Leichtbaukomponente mit einem derartigen Krafteinleitungsbeschlag, ein Verfahren zum Herstellen eines derartigen Krafteinleitungsbeschlags, die Verwendung eines derartigen Krafteinleitungsbeschlags zum Einleiten von Kräften in ein Sandwichbauteil und ein Flugzeug mit Einbauten, die aus Leichtbaukomponenten bestehen, die mit derartigen Krafteinleitungsbeschlägen ausgestattet sind.

### HINTERGRUND DER ERFINDUNG

In modernen Verkehrsmitteln werden für verschiedenste Einbauten, Anbauten und aerodynamische Hilfsflächen Leichtbaumaterialien eingesetzt, die neben einem geringen Gewicht auch eine ausreichende bzw. hohe Festigkeit aufweisen. Insbesondere in modernen Verkehrsflugzeugen werden innerhalb des Rumpfs zahlreiche Objekte mit Sandwichmaterialien konzipiert, die mindestens eine Kernschicht und eine, zwei oder mehr Deckschichten aufweisen. Exemplarisch zu nennen wären der Fußboden in einer Passagierkabine, ein "Crew Rest Compartment" oder Stauschränke. Bei relativ hoch belasteten Strukturbauteilen aus Leichtbaumaterialien in Sandwichbauweise sind dedizierte Krafteinleitungsstellen vorzusehen, an denen die Strukturbauteile befestigt werden können, um eine zuverlässige Übertragung von Kräften ermöglichen zu können.

Im Stand der Technik existiert keine ausreichend zuverlässige und gleichzeitig gewichtssparende Möglichkeit, konzentrierte Kräfte etwa durch eine Schraubverbindung in eine Wabenkern-("honeycomb")-Leichtbauplatte einzuleiten, ohne lokal an der Krafteinleitungsstelle eine massive Kernverstärkung vorzunehmen. Diese wird häufig durch Einkleben eines massiven Bauteils aus einem Verbundwerkstoff oder aus Aluminium realisiert, alternativ könnte die Übertragung von geringeren Kräften in eine Leichtbauplatte erfolgen, die einen Wabenkern aufweist, dessen Wabenzellen mit einer Wabenkernfüllmasse verspachtelt sind.

DE 3 827 279 A1 und EP 0 354 403 B1 zeigen eine als Leichtbaukomponente ausgeführte Schutzwand zum Abfangen von Lasten in einer Transportkabine eines Fahrzeuges, die an einer Aufbaustruktur des Flugzeugrumpfes über Beschläge gehalten wird. Die Beschläge weisen jeweils eine relativ große Fläche auf, die die betreffende Leichtbaukomponente abstützt.

Die gattungsgemäße EP 0 303 821 A1 zeigt einen Einsatz für ein zumindest teilweise aus Kunststoff bestehendes Bauteil, wobei das Bauteil zwei voneinander beabstandet angeordnete, flächige Körper aufweist, die durch einen im Wesentlichen hohlzylindrischen Schaft miteinander verbunden sind. Der Schaft weist bezüglich der flächigen Körper eine gewisse Exzentrizität auf und dient der Verdrehsicherung des Einsatzes im Bauteil.

Diese bekannten Möglichkeiten können im Zuge eines kompromisslosen Leichtbaus für derartige Leichtbaukomponenten keine bevorzugte Lösung darstellen, da die Integration von einem oder mehreren derartigen massiven Krafteinleitungsbauteilen zu einer deutlichen Gewichtserhöhung der Leichtbaukomponenten beiträgt, obwohl für die technische Realisierung nur die zu Anbindungselementen ragenden Flächen für eine ausreichende Krafteinleitung in die Leichtbaukomponente ausreichen würden.

### ZUSAMMENFASSUNG DER ERFINDUNG

Es könnte demnach als eine Aufgabe der Erfindung angesehen werden, einen Krafteinleitungsbeschlag vorzuschlagen, der eine möglichst harmonische Krafteinleitung in Leichtbaukomponenten ermöglicht, gleichzeitig ein geringes Gewicht aufweist und kostengünstig zu fertigen ist.

Eine weitere Aufgabe der Erfindung könnte darin liegen, einen derartigen Krafteinleitungsbeschlag vorzuschlagen, bei dem die übertragbare Kraft durch Modifikation des Krafteinleitungsbeschlags einstellbar ist, wobei eine derartige Modifikation möglichst kostengünstig oder kostenneutral durchgeführt werden könnte.

Eine weitere Aufgabe der Erfindung könnte darin liegen, ein Flugzeug mit Einbauten vorzuschlagen, die aus Leichtbaukomponenten bestehen, welche mit besonders geringem zusätzlichem Gewicht an die Flugzeugstruktur innerhalb des Rumpfs angeordnet werden können.

Die genannten Aufgaben werden durch die Merkmale der unabhängigen Ansprüche gelöst. Vorteilhafte Weiterbildungen sind den jeweiligen Unteransprüchen zu entnehmen.

Gemäß einem ersten Aspekt der Erfindung weist ein erfindungsgemäßer Krafteinleitungsbeschlag mindestens eine Axialkrafteinleitungsfläche, mindestens eine Radialkrafteinleitungsfläche und mindestens ein Aufnahmemittel zum Lagern der Leichtbaukomponente auf, wobei die Axialkrafteinleitungsfläche und die Radialkrafteinleitungsfläche einen Hohlraum einschließen und der erfindungsgemäße Krafteinleitungsbeschlag ein einstückiges, nicht gefügtes Bauteil ausbildet.

Der erfindungsgemäße Krafteinleitungsbeschlag weist im Bereich der Krafteinleitungsflächen wandartige Strukturen auf, die vorgegebene Wandstärken aufweisen können und nach außen durch die Krafteinleitungsflächen begrenzt werden.

Die Radialkrafteinleitungsfläche ist bevorzugt dazu eingerichtet, eine flächige, stoffschlüssige Verbindung mit der Leichtbaukomponente einzugehen, wobei eine Klebeverbindung besonders bevorzugt ist. Durch die Auslegung der Größe und Form der Radialkrafteinleitungsfläche kann die an den Krafteinleitungsbeschlag übertragbare Kraft vorgegeben werden.

Der erfindungsgemäße Krafteinleitungsbeschlag könnte jede beliebige Form annehmen, solange eine Radialkrafteinleitungsfläche und eine Axialkrafteinleitungsfläche vorhanden sind, die dazu geeignet sind, Lagerkräfte von dem Aufnahmemittel an die Leichtbaukomponente zu übertragen bzw. in den Krafteinleitungsbeschlag einzuleiten. Ist die Leichtbaukomponente beispielsweise eine ebene Sandwichplatte, könnte der Krafteinleitungsbeschlag gemäß der vorliegenden Erfmdung mit seinen äußeren Abmessungen an die Dicke der Sandwichplatte oder einer Kernschicht in der Sandwichplatte angepasst sein, um eine harmonische Integration des erfmdungsgemäßen Krafteinleitungsbeschlags realisieren zu können. Die Axialkrafteinleitungsfläche könnte weiterhin bevorzugt dazu eingerichtet sein, senkrecht zur Leichtbaukomponente aufzubringende Kräfte in eine Schubkraft zwischen der Axialkrafteinleitungsfläche und dem Schubkern der Leichtbaukomponente umzuleiten, wohingegen die Radialkrafteinleitungsfläche dazu eingerichtet ist, Druck- oder Zugkräfte aus der parallelen Krafteinleitung in der Erstreckungsrichtung der Sandwichplatte harmonisch an diese übertragen zu können.

Durch den umschlossenen Hohlraum ist eine gewisse Verformbarkeit des erfindungsgemäßen Krafteinleitungsbeschlags gegeben, so dass ein relativ geringer Steifigkeitssprung zwischen dem Krafteinleitungsbeschlag und der Leichtbaukomponente realisiert werden kann. Gleichzeitig wird durch den Hohlraum das Gewicht des Krafteinleitungsbeschlags auf ein geringes Maß reduziert, so dass der erfindungsgemäße Krafteinleitungsbeschlag zu einer geringstmöglichen Gewichtserhöhung der Leichtbaukomponente beiträgt.

Gemäß einer vorteilhaften Weiterbildung des erfindungsgemäßen Krafteinleitungsbeschlags ist das Aufnahmemittel als eine Bohrung ausgestaltet, die in der mindestens einen Axialkrafteinleitungsfläche angeordnet ist. Eine Befestigung der Leichtbaukomponente könnte durch einen Bolzen oder dergleichen erfolgen, der durch diese Bohrung geführt und mit dem Krafteinleitungsbeschlag gemäß der vorliegenden Erfindung verspannt werden könnte. Hierzu könnte die Öffnung zur Aufnahme eines Bolzens auch ein Gewinde aufweisen. Alternativ wären auch andere Befestigungsmittel durch die Öffnung durchführ- und befestigbar.

Gemäß einer weiteren vorteilhaften Ausführungsform des erfindungsgemäßen Krafteinleitungsbeschlags könnte das Aufnahmemittel als eine Buchse ausgeführt sein, die mit einer Öffnung in der mindestens einen Axialkrafteinleitungsfläche korrespondiert. Dadurch kann eine besonders genaue Lagerung bzw. Führung des erfindungsgemäßen Krafteinleitungsbeschlags erfolgen.

Gemäß einer vorteilhaften Weiterbildung ist der erfindungsgemäße Krafteinleitungsbeschlag scheiben- oder dosenförmig ausgebildet. Die Höhe des erfindungsgemäßen Krafteinleitungsbeschlags könnte, wie bereits vorangehend genannt, an die Dicke der Leichtbaukomponente angepasst werden, so dass der Krafteinleitungsbeschlag beispielsweise bündig in eine etwa als Sandwichplatte ausgeführte Leichtbaukomponente integriert werden könnte. Durch die scheiben- oder dosenförmige Gestaltung könnte die Axialkraftaufnahmefläche als ein Zylindermantel ausgeführt werden, während die mindestens eine Radialkrafteinleitungsfläche als eine an einer Ober- und/oder Unterseite des Zylindermantels angeordnete Kreisscheibe ausgeführt sein könnte. Die Radialkrafteinleitungsflächen können vollflächig mit der Axialkrafteinleitungsfläche in einer integralen Bauweise ohne Fügestellen verbunden sein. Durch eine derartige Ausgestaltung bleibt der Querschnitt des Hohlraums an potentiellen Knickstellen beim Beaufschlagen mit Biegekräften vollständig oder zumindest weitestgehend vollständig erhalten. Damit kann in den erfindungsgemäßen Krafteinleitungsbeschlag eine deutlich höhere Biege-, Zug- und Querkraft eingebracht werden, als dies bei einer Bauweise mit einzelnen Komponenten sonst möglich wäre.

Weiter vorteilhaft könnte der erfindungsgemäße Krafteinleitungsbeschlag einen zur Längsachse symmetrischen Aufbau aufweisen. Die Längsachse könnte konzentrisch zu dem Aufnahmemittel angeordnet sein. Die Form der Radialkrafteinleitungsfläche und der Axialkrafteinleitungsfläche ist beliebig wählbar, es können sowohl runde als auch eckige Formen eingesetzt werden.

Gemäß einer vorteilhaften Weiterbildung könnte der erfindungsgemäße Krafteinleitungsbeschlag eine aufgeraute Oberfläche aufweisen. Dies ermöglicht eine vorteilhafte Verklebung mit der Leichtbaukomponente, wie etwa zwischen einer Kernschicht der Leichtbaukomponente und der Axialkrafteinleitungsfläche oder zwischen einer Deckschicht der Leichtbaukomponente und einer Radialkrafteinleitungsfläche.

In einer vorteilhaften Weiterbildung des erfindungsgemäßen Krafteinleitungsbeschlags nimmt die Wandstärke des erfindungsgemäßen Krafteinleitungsbeschlags im Bereich des mindestens einen Radialkrafteinleitungsfläche radial von einer Längsache gesehen nach außen hin ab. Dadurch wird die elastische/plastische Verformbarkeit des erfindungsgemäßen Krafteinleitungsbeschlags vergrößert, so dass vermehrt Zug- und Druckkräfte in die Leichtbaukomponente geleitet werden können, beispielsweise in die Deckschichten von Sandwichplatten. Auftretende und in ein Kernelement gerichtete Querkraftschübe werden reduziert, was der Gesamtfestigkeit im Verbund zugutekommt.

In einer vorteilhaften Weiterbildung des erfindungsgemäßen Krafteinleitungsbeschlags sind Versteifungselemente im Innern des Hohlraums angeordnet und mit der mindestens einen Axialkrafteinleitungsfläche und/oder der mindestens einen Radialkrafteinleitungsfläche verbunden. Die Versteifungselemente könnten verschiedenartige Formen aufweisen und sich sowohl in einer axialen Richtung erstrecken und als massive Zwischenrippen ausgebildet sein, als auch als stäbchenförmige Versteifungselemente, die eine Fachwerkstruktur innerhalb des Hohlraums bilden. Ziel dieser Versteifungselemente ist das Verbessern der Kraftübertragung zwischen dem Aufnahmemittel und Radialkrafteinleitungsflächen und der Axialkrafteinleitungsfläche. Durch Anpassen der Art, Form und Anzahl der Versteifungselemente kann die Verformbarkeit des erfindungsgemäßen Krafteinleitungsbeschlags zumindest teilweise beeinflusst werden.

In einer bevorzugten Weiterbildung weist der erfindungsgemäße Krafteinleitungsbeschlag zwei Radialkrafteinleitungsflächen auf, die als scheibenförmige Elemente ausgebildet sind und durch eine Axialkrafteinleitungsfläche zu einer geschlossenen Oberfläche des erfindungsgemäßen Krafteinleitungsbeschlags ergänzt werden. Dadurch ist ein recht einfacher Aufbau mit einer besonders vorteilhaften einfachen Integrationsmöglichkeit in eine vorhandene Leichtbaukomponente erreicht. Durch Vorgabe der einzelnen Wandstärken des erfindungsgemäßen Krafteinleitungsbeschlags können die durch die daran angeordneten Krafteinleitungsflächen aufnehmbaren Kräfte dimensioniert werden.

In einer vorteilhaften Weiterbildung des erfindungsgemäßen Krafteinleitungsbeschlags ist dieser aus einem aufschmelzbaren Material gefertigt, das es ermöglicht, den Krafteinleitungsbeschlag in aufeinander aufbauenden und miteinander verbundenen Schichten zu erzeugen, wie dies weiter nachfolgend in Zusammenhang mit einem erfindungsgemäßen Herstellverfahren beschrieben wird. Hierzu eignet sich jedes aufschmelzbare Material, wie beispielsweise Kunststoff oder Metall.

Gemäß einer ebenso bevorzugten Weiterbildung des erfindungsgemäßen Krafteinleitungsbeschlags weist der Hohlraum mindestens eine Öffnung auf, die den Hohlraum mit einem den Krafteinleitungsbeschlag umgebenden Medium verbindet. Hierdurch kann dieses Medium, zum Beispiel Luft, in den Hohlraum eindringen und einen Druckausgleich schaffen. Infolgedessen kann ein derartiger Krafteinleitungsbeschlag beispielsweise in großen Höhen oder in tiefen Gewässern eingesetzt werden, da sich zwischen dem Medium und dem Hohlraum kein Druckunterschied aufbauen kann. Derartige Druckunterschiede würden zu Spannungen innerhalb des Krafteinleitungsbeschlags führen, die den Krafteinleitungsbeschlag zusätzlich belasten würden. Dadurch können die durch einen mit Spannungen beaufschlagten Krafteinleitungsbeschlag übertragbaren Biegekräfte geringer sein als bei einem Krafteinleitungsbeschlag, der nicht mit Spannungen beaufschlagt ist.

Ebenso in vorteilhafter Weise weist der erfindungsgemäße Krafteinleitungsbeschlag mindestens eine Öffnung auf, die derart dimensioniert ist, dass ein zur Herstellung des Krafteinleitungsbeschlags erforderliches Granulat aus aufschmelzbarem Material aus dem Hohlraum entfernt werden kann. Wie bereits vorangehend erwähnt, kann der Krafteinleitungsbeschlag in einem generativen Schichtbauverfahren hergestellt werden. Hierbei wird Pulver oder Granulat aus aufschmelzbarem Material in Schichten aufgetragen, wobei ein Laser die Kontur des Krafteinleitungsbeschlags vorzugsweise vollständig aufschmilzt. Da durch dieses Fertigungsverfahren bedingt das nicht aufgeschmolzene Granulat bis zur Fertigstellung des Krafteinleitungsbeschlags auf einer Substratplatte verbleibt, wird dieses Granulat bei der Herstellung eines Hohlraums in diesen Hohlraum eingeschlossen. Es ist zumindest aus Gewichtsund Kostengründen wünschenswert, dieses Granulat möglichst restlos aus dem Hohlraum zu entfernen. Dies kann durch die mindestens eine derartige Öffnung erreicht werden, die in der mindestens einen Radialkrafteinleitungsfläche oder der mindestens einen Axialkrafteinleitungsfläche angeordnet sein könnte.

Das aufschmelzbare Material könnte zumindest als ein Material aus der Gruppe, die Werkzeugstahl, Edelstahl, Stahl, Titan, Aluminium und Eisen-Kobalt-Nickel-Legierungen und Legierungen oder Mischungen dieser Materialien umfasst, realisiert werden. Durch die Verwendung dieser Materialien, die vorzugsweise ohne Binderzusätze verwendet werden, ist ein vollständiges Aufschmelzen der im Pulver verfügbaren Materialien möglich. In Folge kann sich eine ungefähr 100%ige Bauteildichte ergeben, so dass ein Krafteinleitungsbeschlag gefertigt werden kann, dessen mechanische Kennwerte weitestgehend den Spezifikationen des Materials entspricht. Dies bedeutet, dass beispielsweise bei einer Fertigung des Krafteinleitungsbeschlags aus einer Titanlegierung die der entsprechenden Titanlegierung zugrunde liegenden Kennwerte wie beispielsweise Elastizität auch dem Krafteinleitungsbeschlag zugrunde liegen können.

Gemäß einem weiteren Aspekt der Erfindung wird ein Krafteinleitungsbeschlag durch ein generatives Schichtbauverfahren, insbesondere durch ein Selective Laser Melting-Verfahren (auch unter der Abkürzung "SLM" bekannt) hergestellt. Hierbei wird eine Wandung ausgebildet, die einen Hohlraum des Krafteinleitungsbeschlags zumindest teilweise umschließt. Des Weiteren könnte eine Reihe von Versteifungselementen innerhalb des Hohlraums und quer zu einer Erstreckungsrichtung des Krafteinleitungsbeschlags derart ausgebildet werden, dass die Versteifungselemente zumindest Anteile von an einem Krafteinleitungsbeschlag angreifenden Biege-, Axial- und Radialkräften aufnehmen können. Zusätzlich werden die Versteifungselemente mit der Wandung einstückig ausgebildet, wobei sowohl die Wandung als auch die Versteifungselemente aus einem aufschmelzbaren Material mittels des Schichtbauverfahrens ausgebildet wird.

Der Krafteinleitungsbeschlag kann hierbei Schicht für Schicht aufgebaut werden, wobei jeweils eine Schicht aus pulverförmigem Material auf einen bereits bearbeiteten Teil des Krafteinleitungsbeschlags aufgebracht und dann lokal aufgeschmolzen werden kann, so dass sie sich beim anschließenden Erstarren mit diesem verbinden kann. Zum Beispiel mit Hilfe von Laserstrahlen können beliebige dreidimensionale Geometrien mit Hinterschneidungen erzeugt werden. Somit ist die Fertigung eines derart vorteilhaften Krafteinleitungsbeschlags möglich, der sich in konventioneller mechanischer oder gießtechnischer Fertigung nicht herstellen lässt.

In der Regel ist zur Herstellung derartiger Produkte erforderlich, dass dessen Geometriedaten dreidimensional vorliegen und als Schichtdaten verarbeitet sind. Aus den vorliegenden CAD-Daten des Bauteils werden durch sogenanntes "Slicen" zahlreiche Schichten erzeugt. Hierdurch wird ein erfindungsgemäßer Krafteinleitungsbeschlag hergestellt, dessen mechanischen Eigenschaften sämtlichen bekannten Krafteinleitungsbeschlägen überlegen sind, was die Festigkeit und das geringe Gewicht betrifft.

Um eine optimale Flächenstützung zu erhalten, wird der erfindungsgemäße Krafteinleitungsbeschlag schräg von einem Laser aufgebaut. Bei einer scheiben- oder dosenförmigen Gestaltung liegen demnach weder die Axialkrafteinleitungsfläche noch die Radialkrafteinleitungsfläche auf der Substratplatte auf.

Eine Leichtbaukomponente mit mindestens einem erfindungsgemäßen Krafteinleitungsbeschlag erfüllt zumindest eine der vorangehend genannten Aufgaben der Erfindung.

Ein Flugzeug mit mindestens einem Einbauobjekt, wobei das Einbauobjekt mindestens eine Leichtbaukomponente mit mindestens einem erfindungsgemäßen Krafteinleitungsbeschlag aufweist, löst ebenso eine der vorangehend genannten Aufgaben der Erfindung. Bei einem modernen Verkehrsflugzeug könnte etwa die Verkleidung eines Flügel-Rumpf-Übergangs ("Belly Fairing") über mehrere erfindungsgemäße Krafteinleitungsbeschläge an der Struktur des Flugzeugs befestigt werden. Weiterhin können viele Leichtbaukomponenten im Innern der Kabine des Flugzeugs durch erfindungsgemäße Krafteinleitungsbeschläge an der Rumpfstruktur befestigt werden, wie etwa Fußbodenplatten, Kabinendeckenverkleidungen, Monumente oder Monument-Komponenten, Trennwände und eine Vielzahl anders gearteter Innenausstattungsbauteile.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt ein erstes Ausführungsbeispiel eines erfindungsgemäßen Krafteinleitungsbeschlags.
Fig. 2 zeigt ein Ausführungsbeispiel eines erfindungsgemäßen Krafteinleitungsbeschlags in einer in einer Leichtbaukomponente installierten Anordnung.
Fig. 3 zeigt ein weiteres Ausführungsbeispiel eines erfindungsgemäßen Krafteinleitungsbeschlags.
Fig. 4a-4c zeigen den schichtförmigen Aufbau eines erfindungsgemäßen Krafteinleitungsbeschlags.
Fig. 5 zeigt eine schematische Darstellung eines erfindungsgemäßen Verfahrens.
Fig. 6 zeigt ein Flugzeug mit mindestens einem Einbauobjekt mit mindestens einer Leichtbaukomponente, die mindestens einen erfindungsgemäßen Krafteinleitungsbeschlag aufweist.

### DETAILLIERTE DARSTELLUNG EXEMPLARISCHER AUSFÜHRUNGSFORMEN

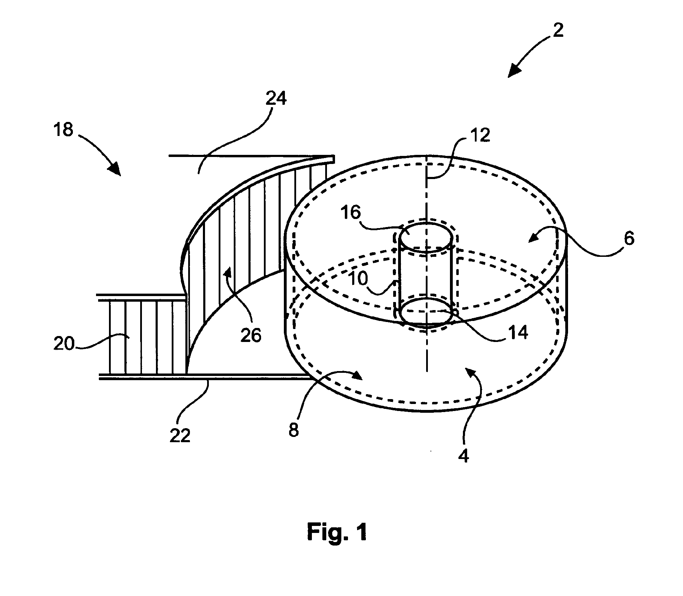

In Fig. 1 wird eine dreidimensionale Ansicht eines erfindungsgemäßen Krafteinleitungsbeschlags 2 gezeigt, der eine dosenförmige Ausgestaltung aufweist. Der erfindungsgemäße Krafteinleitungsbeschlag 2 weist eine Axialkrafteinleitungsfläche 4 sowie zwei konzentrisch zueinander angeordnete und in axialer Richtung voneinander versetzte Radialkrafteinleitungsflächen 6 und 8 auf. Die Radialkrafteinleitungsflächen 6 und 8 sind durch eine Außenseite einer scheibenförmigen Komponente mit einer flachen, blech- oder plattenartigen Bauweise gebildet, die mit mindestens einer weiteren, eine Axialkrafteinleitungsfläche 4 aufweisenden Komponente einen integralen, geschlossenen Körper in Form des erfindungsgemäßen Krafteinleitungsbeschlags 2 bilden.

Die Begriffe "Komponenten" sollen in diesem Zusammenhang nicht so verstanden werden, dass die Krafteinleitungsflächen 4, 6 und 8 an separat hergestellten Bauteilen gebildet sind, sondern "Komponenten" sollen hier auf funktional und in räumlicher Ausrichtung voneinander separierte Bereiche des einstückig ausgeführten erfindungsgemäßen Krafteinleitungsbeschlag deuten.

Die Krafteinleitungsflächen 4, 6 und 8 umschließen einen Hohlraum, in dem zentral eine Buchse 10 angeordnet ist, deren Längsachse 12 konzentrisch mit der Längsachse des Krafteinleitungsbeschlags 2 liegt. Die Buchse 10 weist an ihren beiden Enden jeweils eine Öffnung 14 und 16 auf, die durch die Radialkrafteinleitungsflächen 6 und 8 nach außen zugänglich sind. Die Buchse 10 kann dadurch als Aufnahmemittel eingesetzt werden, beispielsweise könnte dort ein Bolzen oder dergleichen eingesetzt werden, um den erfindungsgemäßen Krafteinleitungsbeschlag 2 an einem festen Punkt zu lagern oder andere Teile daran zu befestigen. Die Buchse 10 könnte als eine Zylinderbuchse oder eine Gewindebuchse ausgeführt sein.

Die einstückige Bauweise des gezeigten erfindungsgemäßen Krafteinleitungsbeschlags kann durch ein SLM-Verfahren erreicht werden.

Etwas weiter links in der Fig. 1 ist ein Abschnitt einer Leichtbaukomponente 18 zu sehen, die eine Kernschicht 20 aufweist, die beispielsweise einen Wabenkern beinhaltet, sowie zwei Deckschichten 22 und 24, die die Kernschicht 20 nach außen hin abdecken. Die Leichtbaukomponente 18 weist ferner eine Aufnahmefläche 26 auf, die eine korrespondierende Formgebung mit der Axialkrafteinleitungsfläche 4 des Krafteinleitungsbeschlags 2 aufweist. Hierdurch kann sich der erfindungsgemäße Krafteinleitungsbeschlag 2 an die Leichtbaukomponente 18 anschmiegen und durch ein geeignetes Verbindungsmittel, beispielsweise einen Klebstoff, fest mit der Leichtbaukomponente 2 verbunden werden. Die Stärke einer derartigen Verbindung ist maßgeblich durch die Größe der Axialkrafteinleitungsfläche 4 bzw. die Aufnahmefläche 26 vorgegeben. Ein erfindungsgemäßer Krafteinleitungsbeschlag könnte demnach durch Dimensionierung der Axialkrafteinleitungsfläche 4 an eine aufzunehmende Kraft angepasst werden. Durch Verwendung eines SLM-Verfahrens zur Herstellung des erfindungsgemäßen Krafteinleitungsbeschlags 2 werden hierdurch kaum messbare Zusatzkosten erzeugt.

Der erfindungsgemäße Krafteinleitungsbeschlag 2 ist bevorzugt derart ausgestaltet, dass sich die Axialkrafteinleitungsfläche 4 in Längsrichtung des erfindungsgemäßen Krafteinleitungsbeschlags 2 über die gleiche Höhe erstreckt wie die Kernschicht 20, so dass der erfindungsgemäße Krafteinleitungsbeschlag 2 zusammen mit der Kernschicht 20 von zwei Deckschichten 22 und 24 bündig abgedeckt werden kann. Dadurch würde der erfindungsgemäße Krafteinleitungsbeschlag 2 ein integrales Bauteil mit der Leichtbaukomponente 18 bilden. Bevorzugt ist hierfür jede der Krafteinleitungsflächen 4, 6 und 8 mit einer angerauten Oberfläche versehen, so dass eine besonders gute Haftung mit der Kernschicht 20 und den Deckschichten 22 und 24 durch ein geeignetes Verbindungsmittel erfolgen kann.

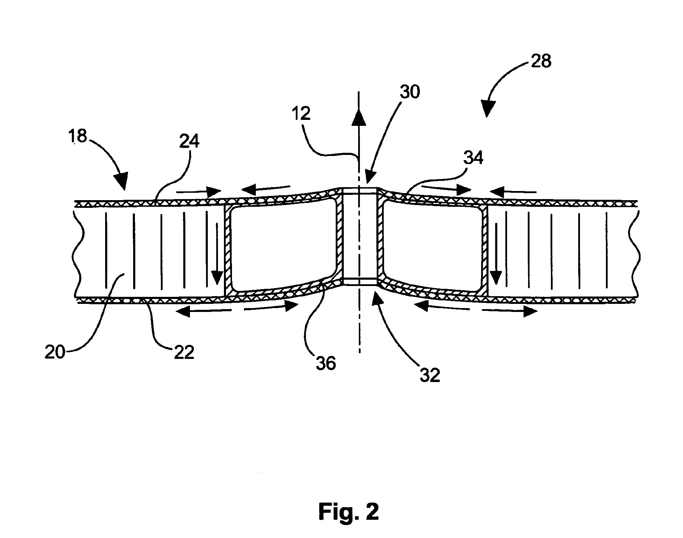

In Fig. 2 wird ein erfindungsgemäßer Krafteinleitungsbeschlag 28 gezeigt, der vollständig in eine Leichtbaukomponente 18 integriert ist und durch eine axiale Kraft verformt ist. Es ist ersichtlich, dass sich der erfindungsgemäße Krafteinleitungsbeschlag 28 über die gleiche Höhe erstreckt, wie die Kernschicht 20 der Leichtbaukomponente 18, so dass die Deckschichten 22 und 24 vollständig sowohl über die Kernschicht 20 als auch über den erfindungsgemäßen Krafteinleitungsbeschlag 28 ragen. Von außen ist dementsprechend nur die Leichtbaukomponente 18 ersichtlich sowie die Öffnungen 30 und 32 des erfindungsgemäßen Krafteinleitungsbeschlags 28.

Das Besondere an dem hier gezeigten Ausführungsbeispiel ist, dass die Wanddicken der die Radialkrafteinleitungsflächen 34 und 36 aufweisenden Komponenten radial von der Längsachse 12 nach außen hin abnehmen, was einer belastungsgerechten Festigkeitsverteilung entspricht oder zumindest nahe kommt. Die Wanddicken könnten durchschnittlich beispielsweise im Bereich von 2-10% der Gesamthöhe des erfindungsgemäßen Krafteinleitungsbeschlags 28 liegen. Durch Dimensionierung der Wanddicken und des Verlaufs der Wanddicken der die Radialkrafteinleitungsflächen 34 und 36 aufweisenden Komponenten kann die Festigkeit des Krafteinleitungsbeschlags 28 an die aufzunehmenden Kräfte angepasst werden. Durch Verwendung eines SLM-Verfahrens zur Herstellung des erfindungsgemäßen Krafteinleitungsbeschlags 28 werden hierdurch keine messbaren Zusatzkosten erzeugt.

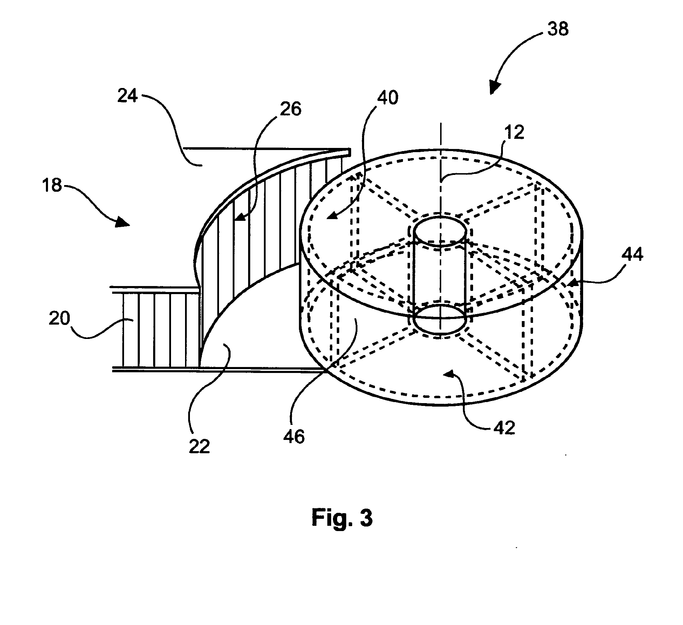

In Fig. 3 wird ein weiteres Ausführungsbeispiel eines erfindungsgemäßen Krafteinleitungsbeschlags 38 gezeigt, der neben zwei Radialkrafteinleitungsflächen 40 und 42 eine Axialkrafteinleitungsfläche 44 aufweist, die einen Hohlraum umschließen, in dem zusätzliche Verstärkungselemente 46 angeordnet werden. Die Verstärkungselemente 46 erstrecken sich in dem gezeigten Beispiel in einer Richtung parallel zu der Längsachse 12 des erfindungsgemäßen Krafteinleitungsbeschlags 38 zwischen den beiden den Krafteinleitungsbeschlag 38 begrenzenden Radialkrafteinleitungsflächen 40 und 42 und bilden mit die Radialkrafteinleitungsflächen 40 und 42 aufweisenden Komponenten eine einstückige, integrale Struktur. Für den Fachmann ist verständlich, dass auch beliebige andere Formen und Ausrichtungen der Verstärkungselemente 46 realisiert werden können. Durch Anwendung eines SLM-Verfahrens zur Herstellung des erfindungsgemäßen Krafteinleitungsbeschlags 38 werden hierdurch quasi keine messbaren Zusatzkosten erzeugt und eine Anpassung des erfindungsgemäßen Krafteinleitungsbeschlags 38 ist völlig flexibel realisierbar.

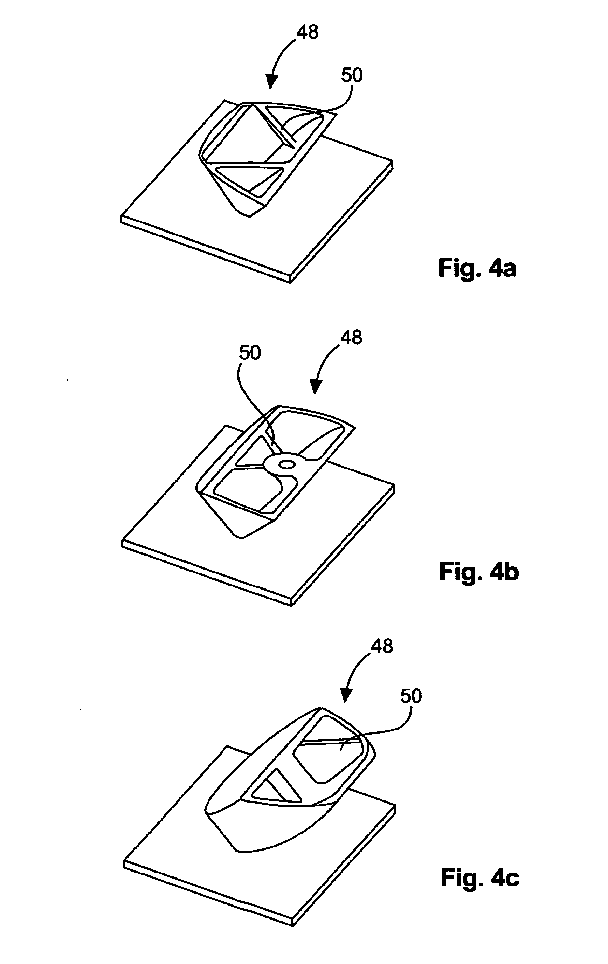

In den Fig. 4a-4c wird anhand einer dreidimensionalen fortschreitenden Fertigungsansicht gezeigt, wie ein erfmdungsgemäßer Krafteinleitungsbeschlag 48 mit in den Hohlraum integrierten Versteifungselementen 50 gefertigt werden kann. Eine derartige komplexe Formgebung kann durch ein Selective-Laser-Melting-Verfahren (SLM) schichtweise hergestellt werden, indem die Konturen des Krafteinleitungsbeschlags in einem Metallpulverbett schichtweise durch die lokale Erwärmung mittels eines Laserstrahls aufgebaut wird. Nicht benötigtes Pulver wird entfernt bzw. aus dem bei der Herstellung entstehenden Hohlräumen ausgeblasen. Hierdurch ist im Gegensatz zum Stand der Technik keine getrennte Herstellung von einzelnen Bauteilen notwendig, die später miteinander verbunden werden müssen. Das heißt, der erfindungsgemäße Krafteinleitungsbeschlag 48 ist als ein einziges, einstückiges Bauteil in integraler Bauweise bereitgestellt, es entstehen keine mechanischen Spannungen infolge von Verschweißungen oder unterschiedlichen lokalen Erhitzungen des Materials.

Eine Besonderheit dieses Fertigungsverfahrens liegt darin, dass direkt aus CAD-Daten ein derartiges Bauteil computergesteuert hergestellt werden kann, was bereits ab dem ersten Bauteil kostengünstig geschieht, da keine Rüstkosten durch erforderliche Anpassungen an Fertigungsmaschinen entstehen.

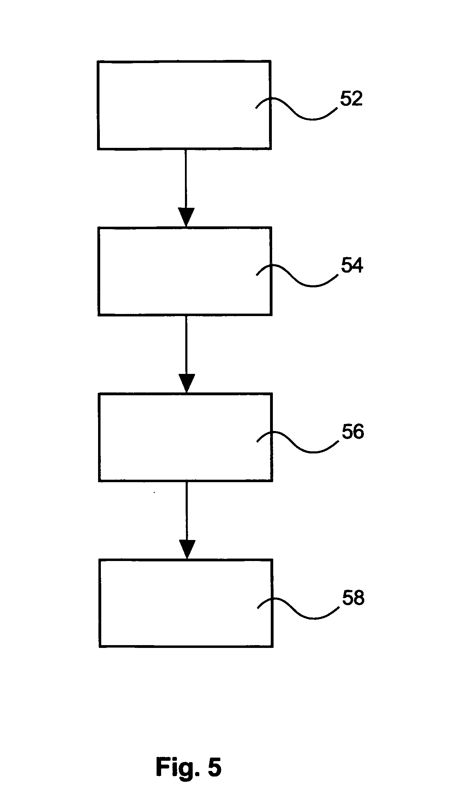

Fig. 5 zeigt die wesentlichen Schritte des erfindungsgemäßen Herstellverfahrens. Die Herstellung des erfindungsgemäßen Krafteinleitungsbeschlags erfolgt durch ein Selective-Laser-Melting-Verfahren (SLM-Verfahren). Hierbei wird durch sogenanntes "Slicen" aufgrund von vorliegenden CAD-Daten der Krafteinleitungsbeschlag mittels zahlreicher Schichten erzeugt, was zu einem einstückigen Bauteil führt.

Ein Pulver oder Granulat wird auf eine Bauplattform mit Hilfe beispielsweise eines Rakels vollflächig in einer Dicke von etwa 0,001 bis etwa 0,2 mm aufgebracht 52. Die Schichten werden durch eine Ansteuerung eines geeigneten Laserstrahls entsprechend der "geslicten" Kontur der Stütze schrittweise in das Pulverbett geschmolzen 54. Eine Substratplattform wird später geringfügig abgesenkt 56 und danach eine neue Schicht des Pulvers aufgezogen. Das Pulver wird durch Anheben einer Pulverplattform oder als Vorrat in dem Rakel zur Verfügung gestellt. Der Schichtaufbau erfolgt in vertikaler Richtung. Die Energie, die vom Laser zugeführt wird, wird vom Pulver absorbiert und führt zu einem lokal begrenzten Verschmelzen von Pulverpartikeln.

Da das SLM-Verfahren bedingt, dass die einzelnen Schichten durch die Ansteuerung eines Laserstrahls in ein Pulverbett eingeschmolzen werden, verbleibt Pulver in Hohlräumen und wird nach der Fertigstellung durch entsprechende Öffnungen entfernt 58.

Als Werkstoff zur Herstellung des erfindungsgemäßen Krafteinleitungsbeschlags könnte beispielsweise eine Aluminiumlegierung AlZn6MgCu, AlZn5,5MgCu oder AlZn6CuMgZr, hochfester Stahl oder Edelstahl wie A 17Cr-4Ni-3Cu, oder etwa auch eine Titanlegierung TiA16V4 verwendet werden.

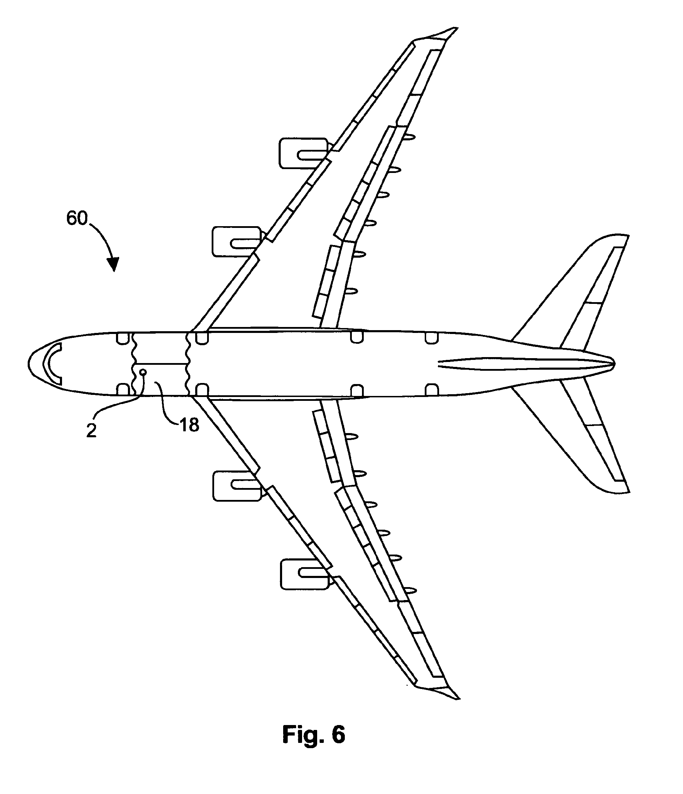

Schließlich zeigt Fig. 6 ein Flugzeug 60, das in dem Flugzeugrumpf mehrere Einbauten aufweist, die mittels Leichtbaukomponenten 18 realisiert sind, wobei diese Leichtbaukomponenten jeweils beispielhaft mit mindestens einem erfindungsgemäßen Krafteinleitungsbeschlag 2 bestückt sind.

Ergänzend sei darauf hinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Krafteinleitungsbeschlag
- 4: Axialkrafteinleitungsfläche
- 6: Radialkrafteinleitungsfläche
- 8: Radialkrafteinleitungsfläche
- 10: Buchse
- 12: Längsachse
- 14: Öffnung
- 16: Öffnung
- 18: Leichtbaukomponente
- 20: Kernschicht
- 22: Deckschicht
- 24: Deckschicht
- 26: Aufnahmefläche
- 28: Krafteinleitungsbeschlag
- 30: Öffnung
- 32: Öffnung
- 34: Radialkrafteinleitungsfläche
- 36: Radialkrafteinleitungsfläche
- 38: Krafteinleitungsbeschlag
- 40: Radialkrafteinleitungsfläche
- 42: Radialkrafteinleitungsfläche
- 44: Axialkrafteinleitungsfläche
- 46: Versteifungselement
- 48: Krafteinleitungsbeschlag
- 50: Versteifungselement
- 52: Aufbringen Pulver
- 54: Schmelzen
- 56: Absenken Substratplattform
- 58: Entfernen Pulver
- 60: Flugzeug

## Patentansprüche

1. Krafteinleitungsbeschlag (2, 28, 38, 48) für Leichtbaukomponenten, wobei der Krafteinleitungsbeschlag dosenförmig ausgebildet ist und
- zwei scheibenförmige Radialkrafteinleitungsflächen (6, 8);
- mindestens eine als Zylindermantel ausgeführte Axialkrafteinleitungsfläche (4) und
- mindestens ein Aufnahmemittel (10) zum Lagern des Krafteinleitungsbeschlags aufweist;
wobei der Krafteinleitungsbeschlag (2, 28, 38, 48) als ein einstückiges, nicht gefügtes Bauteil ausgebildet ist,
**dadurch gekennzeichnet, dass** die Radialkrafteinleitungsflächen (6, 8) und die Axialkrafteinleitungsfläche (4) einen Hohlraum einschließen.

2. Krafteinleitungsbeschlag (2, 28, 38, 48) nach Anspruch 1, aufweisend eine raue Oberfläche.

3. Krafteinleitungsbeschlag (2, 28, 3 8, 48) nach Anspruch 1 oder 2, ferner aufweisend mindestens ein Versteifungselement (46, 50), das im Innern des Hohlraums angeordnet ist.

4. Krafteinleitungsbeschlag (2, 28, 3 8, 48) nach Anspruch 3, wobei das Versteifungselement (46, 50) als ein ebenes Bauteil ausgeführt ist.

5. Krafteinleitungsbeschlag (2, 28, 38, 48) nach Anspruch 3, wobei das Versteifungselement (46, 50) als ein stabförmiges Bauteil ausgeführt ist.

6. Krafteinleitungsbeschlag (2, 28, 38, 48) nach einem der vorhergehenden Ansprüche, bei dem die Wandstärke des Krafteinleitungsbeschlags im Bereich der Radialkrafteinleitungsfläche (6, 8) radial von einer Längsachse (12) nach außen hin geringer wird.

7. Krafteinleitungsbeschlag (2, 28, 38, 48) nach einem der vorhergehenden Ansprüche, bei dem das Aufnahmemittel als mindestens eine Öffnung ausgebildet ist, die sich in die mindestens einen Radialkraftaufnahmefläche (6, 8) erstreckt.

8. Krafteinleitungsbeschlag (2, 28, 38, 48) nach einem der Ansprüche 1 bis 4, bei dem das Aufnahmemittel als mindestens eine Buchse (10) ausgeführt ist, die sich in die mindestens eine Radialkrafteinleitungsfläche (6, 8) erstreckt.

9. Krafteinleitungsbeschlag (2, 28, 38, 48) nach einem der vorhergehenden Ansprüche, das durch ein generatives Schichtbauverfahren hergestellt ist.

10. Leichtbaukomponente, aufweisend
- mindestens eine Kernschicht (20),
- mindestens eine Deckschicht (22, 24) und
- mindestens einen Krafteinleitungsbeschlag (2, 28, 38, 48) nach einem der Ansprüche 1 bis 8,
wobei die Leichtbaukomponente eine mit einer Axialkraftaufnahmefläche (4) korrespondierend geformte Aufnahmefläche (26) zum Anschmiegen an die Axialkraftaufnahmefläche des Krafteinleitungsbeschlags (2, 28, 38, 48) aufweist und
wobei die Erstreckung des Krafteinleitungsbeschlags (2, 28, 38, 48) zum bündigen Abdecken der Kernschicht und des daran anschmiegenden Krafteinleitungsbeschlags (2, 28, 38, 48) eingerichtet ist.

11. Verwendung einer Leichtbaukomponente (18) nach Anspruch 10 in einem Flugzeug.

12. Verfahren zur Herstellung eines Krafteinleitungsbeschlags (2, 28, 38, 48) nach einem der Ansprüche 1 bis 9 durch ein generatives Schichtbauverfahren, insbesondere durch ein Selective Laser Melting-Verfahren, bei dem schichtweise der Krafteinleitungsbeschlag (2, 28, 38, 48) aus einem aufschmelzbaren Material mittels des Schichtbauverfahrens aufgeschmolzen werden.

13. Flugzeug (60) mit mindestens einem Einbauobjekt, das mindestens eine Leichtbaukomponente (18) mit mindestens einem Krafteinleitungsbeschlag (2, 28, 38, 48) nach einem der Ansprüche 1 bis 9 zum Lagern der Leichtbaukomponente aufweist.

## Claims

1. A force introduction fitting (2, 28, 38, 48) for light constructional components, wherein the force introduction fitting has a can-shaped design and comprises
- two disc-shaped radial force introduction surfaces (6, 8);
- at least one axial force introduction surface (4) in the form of a cylinder jacket, and
- at least one receiving means (10) for holding the force introduction fitting;
wherein the force introduction fitting (2, 28, 38, 48) is designed as a single-piece non-joined component,
**characterized in that** the radial force introduction surfaces (6, 8) and the axial force introduction surface (4) enclose a hollow space.

2. The force introduction fitting (2, 28, 38, 48) of claim 1, comprising a rough surface.

3. The force introduction fitting (2, 28, 38, 48) of claim 1 or 2, further comprising at least one stiffening element (46, 50) arranged in the interior of the hollow space.

4. The force introduction fitting (2, 28, 38, 48) of claim 3, wherein the stiffening element (46, 50) is designed as a planar component.

5. The force introduction fitting (2, 28, 38, 48) of claim 3, wherein the stiffening element (46, 50) is designed as a bar-shaped component.

6. The force introduction fitting (2, 28, 38, 48) of any one of the preceding claims, in which the wall thickness of the force introduction fitting in the region of the radial force introduction surface (6, 8) radially tapers off from a longitudinal axis (12) towards the outside.

7. The force introduction fitting (2, 28, 38, 48) of any one of the preceding claims, in which the receiving means is designed as at least one opening that extends into the at least one radial load receiving surface (6, 8).

8. The force introduction fitting (2, 28, 38, 48) of any one of claims 1 to 4, in which the receiving means is designed as at least one bush (10) that extends into the at least one radial force introduction surface (6, 8).

9. The force introduction fitting (2, 28, 38, 48) of any one of the preceding claims, produced by means of a generative layer construction method.

10. A light constructional component, comprising
- at least one core layer (20),
- at least one covering layer (22, 24), and
- at least one force introduction fitting (2, 28, 38, 48) of any one of claims 1 to 8,
wherein the light constructional component comprises a receiving surface (26) that has been formed so as to correspond to an axial load receiving surface (4), for conforming to the axial load receiving surface of the force introduction fitting (2, 28, 38, 48), and
wherein the extension of the force introduction fitting (2, 28, 38, 48) is designed for covering the core layer and the force introduction fitting (2, 28, 38, 48) conforming to the aforesaid so that they are flush.

11. The use of a light constructional component (18) of claim 10 in an aircraft.

12. A method for manufacturing a force introduction fitting (2, 28, 38, 48) of any one of claims 1 to 9 by means of a generative layer construction method, in particular by means of a selective laser melting method, in which the force introduction fitting (2, 28, 38, 48) is melted on in layers from a meltable material by means of the layer construction method.

13. An aircraft (60) with at least one installation object that comprises at least one light constructional component (18) with at least one force introduction fitting (2, 28, 38, 48) of any one of claims 1 to 9 for holding the light constructional component.

## Revendications

1. Ferrure d'application de force (2, 28, 38, 48) pour éléments de construction légère, la ferrure d'application de force étant réalisée sous la forme d'une boîte et présentant
- deux surfaces d'application de force radiale (6, 8) en forme de disque ;
- au moins une surface d'application de force axiale (4) réalisée sous la forme d'une enveloppe cylindrique et
- au moins un moyen de réception (10) pour le montage de la ferrure d'application de force ;
la ferrure d'application de force (2, 28, 38, 48) étant réalisée sous la forme d'une pièce monobloc, sans joints,
**caractérisée en ce que** les surfaces d'application de force radiale (6, 8) et la surface d'application de force axiale (4) forment un espace creux.

2. Ferrure d'application de force (2, 28, 38, 48) selon la revendication 1, présentant une surface rugueuse.

3. Ferrure d'application de force (2, 28, 38, 48) selon la revendication 1 ou 2, présentant en outre au moins un élément de renforcement (46, 50) disposé à l'intérieur de l'espace creux.

4. Ferrure d'application de force (2, 28, 38, 48) selon la revendication 3, l'élément de renforcement (46, 50) étant réalisé sous la forme d'une pièce plate.

5. Ferrure d'application de force (2, 28, 38, 48) selon la revendication 3, l'élément de renforcement (46, 50) étant réalisé sous la forme d'une pièce en bâton.

6. Ferrure d'application de force (2, 28, 38, 48) selon une des revendications précédentes, dans laquelle l'épaisseur de paroi de la ferrure d'application de force au niveau de la surface d'application de force radiale (6, 8) est radialement plus faible depuis un axe longitudinal (12) vers l'extérieur.

7. Ferrure d'application de force (2, 28, 38, 48) selon une des revendications précédentes, dans laquelle le moyen de réception est réalisé sous la forme d'au moins une ouverture qui s'étend dans l'au moins une surface de réception de force radiale (6, 8).

8. Ferrure d'application de force (2, 28, 38, 48) selon une des revendications 1 à 4, dans laquelle le moyen de réception est réalisé sous la forme d'au moins une douille (10) qui s'étend dans l'au moins une surface d'application de force radiale (6, 8).

9. Ferrure d'application de force (2, 28, 38, 48) selon une des revendications précédentes qui est fabriquée au moyen d'un procédé de construction par génération de couches.

10. Élément de construction légère, présentant :
- au moins une couche centrale (20),
- au moins une couche de finition (22, 24) et
- au moins une ferrure d'application de force (2, 28, 38, 48) selon une des revendications 1 à 8,
dans lequel l'élément de construction légère présente une surface de réception (26) formée de manière correspondante avec une surface de réception de force axiale (4) afin d'être serrée contre la surface de réception de force axiale de la ferrure d'application de force (2, 28, 38, 48) et
dans lequel la longueur de la ferrure d'application de force (2, 28, 38, 48) est agencée pour recouvrir de manière affleurante la couche centrale et la ferrure d'application de force (2, 28, 38, 48) serrée contre celle-ci.

11. Utilisation d'un élément de construction légère (18) selon la revendication 10 dans un avion.

12. Procédé de fabrication d'une ferrure d'application de force (2, 28, 38, 48) selon une des revendications 1 à 9 au moyen d'un procédé de construction par génération de couches, en particulier au moyen d'un procédé de fusion sélective par laser, dans lequel la ferrure d'application de force (2, 28, 38, 48) est fusionnée par couches à partir d'un matériau fusionnable au moyen du procédé de construction par couches.

13. Avion (60) comprenant au moins un objet de montage, qui présente au moins un élément de construction légère (18) avec au moins une ferrure d'application de force (2, 28, 38, 48) selon une des revendications 1 à 9 afin de monter l'élément de construction légère.
